# EUROPEAN PATENT APPLICATION

(11) **EP 1 160 747 A2**
(43) Date of publication of application: **05.12.2001**
(21) Application number: 01304304.7
(22) Date of filing: 15.05.2001
(51) Int. Cl.: G07F 17/16, G07F 7/00

(54) **Data provision device and method**

(30) Priority: 30.05.2000 JP 2000160848
(71) Applicant: Konami Corporation, Minato-ku, Tokyo (JP); KCE Tokyo Inc., Tokyo (JP)
(72) Inventor: Umekawa, Tomoharu, Tokyo (JP)
(74) Representative: Pluckrose, Anthony William

(57) **Abstract**

A transaction process, such as a charging process, can be restricted from being repeatedly performed when a data item that has been downloaded once is to be redownloaded. A charged data table including user identifying information (ID) and the name of a charged data item associated with each other is prestored in a charge management DB. When a data provision request is made for the charged data item, the charging process is skipped at a data distribution server (18), allowing the data item to be downloaded without any charging process.

## Description

The present invention relates to a device and method for providing data, and more particularly to a technique for avoiding excessive transaction processes (such as charging processes) in repeatedly distributing the same data item.

Recent developments in communication networks, such as Internet and cable TV network, have led to a variety of services provided through such communication networks. Especially, a variety of data distribution services, including music distribution services for commercially available music and ringing tones or melodies of mobile phones, various game distribution services, and image distribution services for images used in personal computers and mobile phones (such as a wallpaper image) allow data to be immediately provided in response to a user's request, and, therefore, are expected to be widespread because of such convenience. Such a data distribution service is charged at a variable rate based on the time of usage or amount of data, or at a fixed rate for each month, for example, or charged for each downloaded data item.

However, according to conventional charging systems other than the fixed rate system, users are recharged for downloading a particular data item for the second time, and therefore the once downloaded data must be carefully stored. In terminals having only a small data storage capacity, such as mobile phones and portable computers, it is not easy to keep the downloaded data in storage after it becomes unnecessary even if it might be needed again in the future, and the data must often be deleted. Although it is possible to transfer and store the downloaded data to a separate storage device for possible reuse, mobile phones are usually provided with an inadequate data transfer function, and even with portable computers data transfer is generally troublesome. Accordingly, in order to redownload data, users really have no other choice than unwillingly accept a recharge for the once downloaded data when it is needed again.

The present invention provides, in a first aspect, a data provision device for providing a user with data, comprising:
data provision request reception means for receiving a data provision request from the user;
user identifying information acquisition means for acquiring user identifying information identifying the user;
table storage means for storing a table in which the user identifying information and data identifying information identifying a data item for which a transaction process is completed are associated with each other;
data identifying information reading means for reading out from said table the data identifying information associated with the user identifying information acquired by said user identifying information acquisition means;
determination means for determining whether or not said data provision request is made for the data item for which the transaction process is completed and which is identified by the data identifying information read out by said data identifying information reading means;
data transmission means for performing the transaction process for data provision and returning a data item in accordance with said data provision request when said determination means determines that said data provision request is not made for the data item for which the transaction process is completed and which is identified by the data identifying information read out by said data identifying information reading means; and
data retransmission means for restricting said transaction process for data provision and returning the data item in accordance with said data provision request when said determination means determines that said data provision request is made for the data item for which the transaction process is completed and which is identified by the data identifying information read out by said data identifying information reading means.

In a second aspect, the present invention provides a data provision method for providing a user with data, said method comprising:
receiving a data provision request from the user;
acquiring user identifying information identifying the user;
reading out data identifying information associated with the acquired user identifying information from a table in which the user identifying information and the data identifying information identifying a data item for which a transaction process is completed are associated with each other;
determining whether or not said data provision request is made for the data item for which the transaction process is completed and which is identified by the readout data identifying information;
restricting said transaction process for data provision when said data provision request is determined as being made for the data item for which the transaction process is completed and which is identified by the data identifying information read out from said table.

The present invention has been conceived in view of the above-described problems, and an object thereof is to provide a data provision device and method capable of restricting excessive transaction process, such as a charging process, from being performed when a downloaded data item is repeatedly downloaded.

In order to solve the above-described problems, a data provision device according to one aspect of the present invention is a data provision device for providing a user with data, including: data provision request reception means for receiving a data provision request from the user; user identifying information acquisition means for acquiring user identifying information identifying the user; table storage means for storing a table in which the user identifying information and data identifying information identifying a data item for which a transaction process is completed are associated with each other; data identifying information reading means for reading out from said table the data identifying information associated with the user identifying information acquired by said user identifying information acquisition means; determination means for determining whether or not said data provision request is made for the data item for which the transaction process is completed and which is identified by the data identifying information read out by said data identifying information reading means; data transmission means for performing the transaction process for data provision and returning a data item in accordance with said data provision request when said determination means determines that said data provision request is not made for the data item for which the transaction process is completed and which is identified by the data identifying information read out by said data identifying information reading means; and data retransmission means for restricting said transaction process for data provision and returning the data item in accordance with said data provision request when said determination means determines that said data provision request is made for the data item for which the transaction process is completed and which is identified by the data identifying information read out by said data identifying information reading means.

A data provision method according to another aspect of the present invention is a data provision method for providing a user with data, including: receiving a data provision request from the user; acquiring user identifying information identifying the user; reading out data identifying information associated with the acquired user identifying information from a table in which the user identifying information and the data identifying information identifying a data item for which a transaction process is completed are associated with each other; determining whether or not said data provision request is made for the data item for which the transaction process is completed and which is identified by the readout data identifying information; performing the transaction process for data provision and returning the data item in accordance with said data provision request when said data provision request is determined as not being made for the data item for which the transaction process is completed and which is identified by the data identifying information read out from said table; and restricting said transaction process for data provision and returning the data item in accordance with said data provision request when said data provision request is determined as being made for the data item for which the transaction process is completed and which is identified by the data identifying information read out from said table.

According to the present invention, when a data provision request is received and user identifying information is acquired, data identifying information associated with the acquired user identifying information is read out from a table. The data identifying information identifies a data item for which a transaction process is completed. When the received data provision request is made for the data item for which the transaction process is completed and which is identified by the data identifying information read out from the table, the transaction process is restricted and the data item in accordance with the data provision request is returned. On the other hand, when the received data provision request is not made for the data item for which the transaction process is completed and which is identified by the data identifying information read out from the table, the transaction process is performed, and the data item in accordance with the data request is returned. The transaction process includes a charging process, a process of reducing the value of coupons or discount tickets, and the like. The transaction process includes not only the process dealing with actually circulated currencies, but also the process dealing with, for example, medals used in a game and the like (including real medals and virtual ones existing only electronically in the computer system). The transaction process can be restricted by, for example, canceling the charge, charging data at a discounted price, or the like. Thus, the transaction process, such as a charging process, can be restricted from being performed excessively when the data item for which the transaction process has already been completed for a certain user is to be redownloaded.

According to one embodiment of the present invention, the data provision device further includes a list generation means for reading out from said table the data identifying information associated with the user identifying information acquired from said user identifying information acquisition means and generating a list including a name of the data item for which the transaction process is completed and which is identified by the readout data identifying information, and list transmission means for transmitting the list generated by said list generation means to the user identified by the user identifying information acquired by said user identifying information acquisition means. As a result, the user can easily be informed of the data item for which the transaction process is completed. The list generated by the list generation means may include, for example, only the name of the data items for which the transaction process is completed, or may also include the name of other data items displayed distinctively from the name of the data item for which the transaction process is completed.

According to another embodiment of the present invention, said data transmission means additionally stores in said table the data identifying information identifying the data item in accordance with said data provision request in association with the user identifying information acquired by said user identifying information acquisition means when said transaction process is completed. Consequently, the charging process can be restricted when the same data item is downloaded from the next time.

Preferred embodiments of the present invention will now be described by way of example only with reference to the accompanying drawings, in which:
Fig. 1 illustrates an overall configuration of a data distribution system according to the present invention.
Fig. 2 illustrates an example of a charged data table according to the present invention.
Fig. 3 is a flow chart illustrating a process performed by a data distribution server according to a first embodiment of the present invention.
Fig. 4 illustrates an example of a download data list according to the first embodiment of the present invention.
Fig. 5 illustrates an example of a download data list according to a second embodiment of the present invention.
Fig. 6 illustrates an example of a purchased download data list according to the second embodiment of the present invention.
Fig. 7 is a flow chart illustrating a process performed by a data distribution server according to the second embodiment of the present invention.
Fig. 8 illustrates an example of a download data list according to the third embodiment of the present invention.
Fig. 9 is a flow chart illustrating a process performed by a data distribution server according to the third embodiment of the present invention.

The entire disclosure of the corresponding Japanese application 2000-160848 filed on May 30, 2000 including specification, claims, drawings and summary are incorporated by reference herein.

Preferred embodiments of the present invention will now be described in detail with reference to the drawings.

### [First Embodiment]

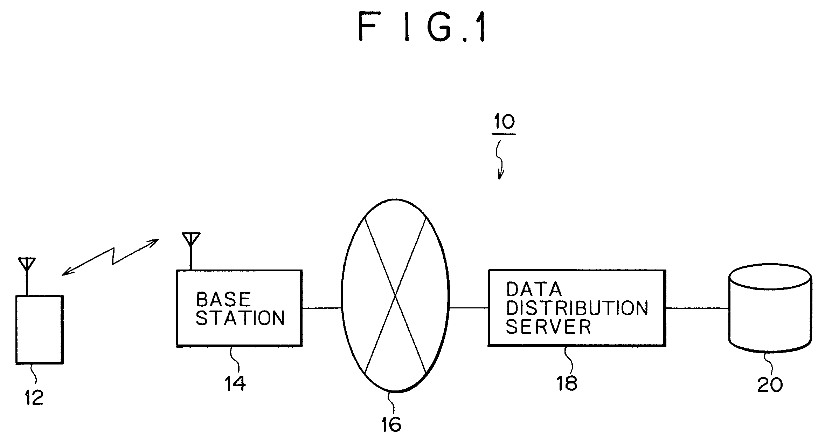

Fig. 1 shows an overall configuration of a data distribution system according to a first embodiment of the present invention. A data distribution system 10 shown in Fig. 1 includes a mobile phone 12, a base station 14, a network 16, a data distribution server 18, and a charge management database (DB) 20.

The mobile phone 12 includes a display, such as an LCD, a group of buttons including dialing buttons and a direction button, and a speaker. The mobile phone 12 is of a conventionally well-known type. The group of buttons makes it possible to dial numbers, and a telephone book, various set menus, and a wallpaper image selected to a user's liking are shown on the display. From the speaker provided on the mobile phone 12R, ringing tones or melodies prestored thereinin the mobile phone, created by inputting the musical score with use ofusing the group of buttons, or downloaded through the network 16, can be reproduced from the speaker provided on the mobile phone 12.

Thus, the mobile phone 12 is especially provided with a function of connecting to a network 16, such as the Internet, through the base station 14. This network connecting function of the mobile phone 12 is utilized in the present embodiment. More specifically, a user of the mobile phone 12 can transmit a URL (uniform resource locator) input by using the group of buttons to the network 16, and acquire the data corresponding to the URL from the data distribution server 18. That is, the data distribution server 18 interprets the URL transmitted from the mobile phone 12, and the data corresponding to the URL is sent back to the mobile phone 12 through the network 16 and the base station 14. When the received data is hypertext, the mobile phone 12 displays an image based thereon. When it is data of another type (such as music data representing a ringing melody), the mobile phone 12 stores it in a built-in memory after receiving the data. In the mobile phone 12, when hypertext including a wallpaper image is received, the image can be registered as the wallpaper by selecting it with the group of buttons.

In relaying the URL transmitted in a wireless manner from the mobile phone 12 to the network 16, the base station 14 adds to the URL user identifying information assigned to the mobile phone 12, so that the sender of the URL can be identified in the data distribution server 18.

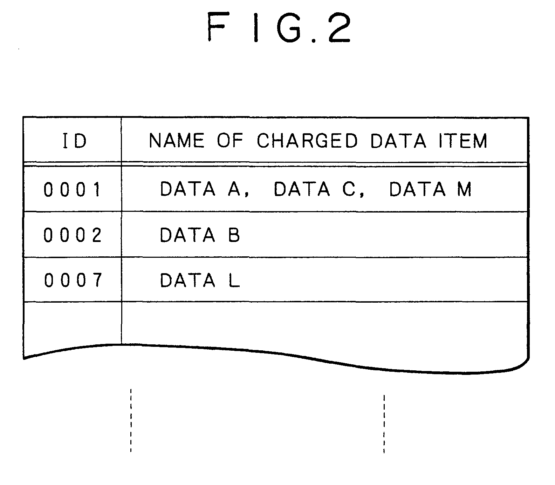

The data distribution server 18 is a server computer which is connected to the network 16, and to which the charge management DB 20 is connected. The data distribution server 18 and the charge management DB 20 form a data provision device. Fig. 2 shows an example of a charged data table stored in the charge management DB 20. As shown in Fig. 2, the charged data table includes user identifying information (ID) and the name of a charged data item in association with each other. In the example shown, the names of three data items (data identifying information), i.e. "data item A", "data item C" and "data item M" are associated with the user identifying information labeled with "0001". The table indicates that the charging process for these three data items has already been performed for the user identified by the user identifying information labeled with "0001".

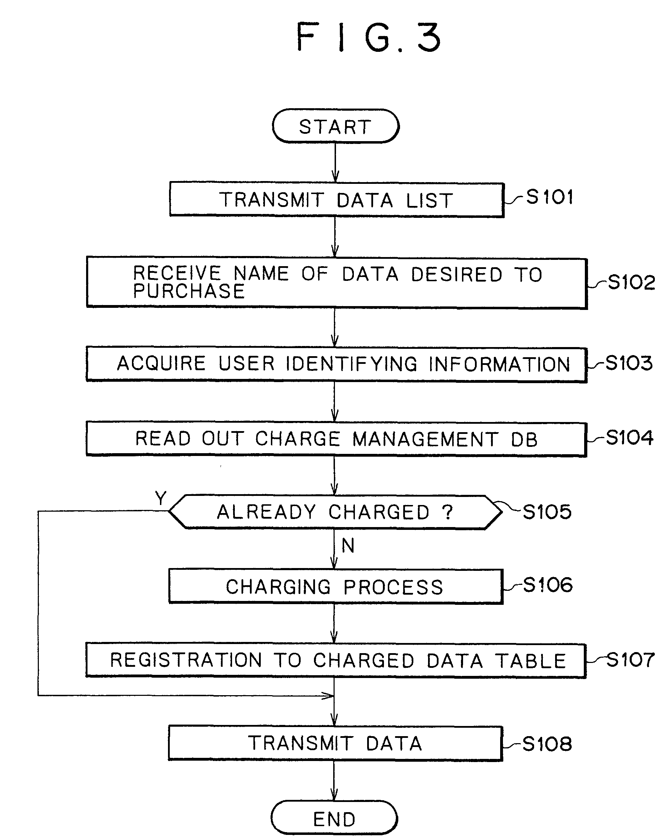

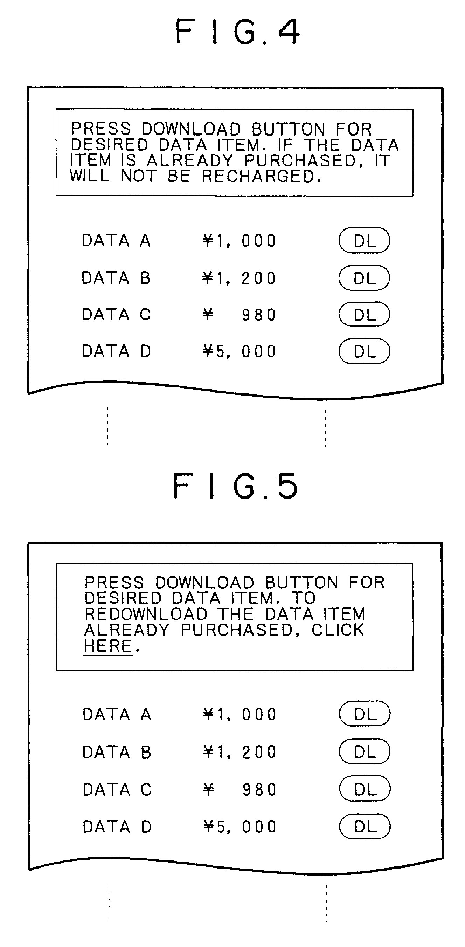

A process performed by the data distribution server 18 will next be discussed. Fig. 3 is a flow chart for describing the process performed by the data distribution server 18. As shown, receiving a URL for requesting a download data list from the mobile phone 12, the data distribution server 18 transmits hypertext representing the download data list shown in Fig. 4 to the mobile phone 12 (S101). The download data list shown in Fig. 4 is presented on the display of the mobile phone 12, and the user can scroll it using the group of buttons to sequentially display all of the data at the mobile phone 12. The download data list indicates, for each downloadable data item, a set of data item name and price, and a download button for directing the data item to be downloaded. An informational document is displayed at a topmost portion of the list. When a download button labeled with "DL" is selected by using the group of buttons of the mobile phone 12, a URL (data provision request) including the data item name (data identifying information) shown on the left side of the button is transmitted to the data distribution server 18 through the base station 14 and the network 16.

Referring again to Fig. 3, when the data distribution server 18 receives the URL as the data provision request from the mobile phone 12 (S102), the server 18 next acquires the user identifying information added to the URL (S103). The user identifying information identifies the mobile phone 12 that has transmitted the URL as the data provision request and also the user of the phone 12, and is added to the URL by the base station 14 as described above. The data distribution server 18 then reads out the name of the charged data item associated with the user identifying information acquired at step S103 from the charged data table stored in the charge management DB 20 (S104). Determination is made as to whether or not the data item name included in the URL received at step S102 is one of the data item names read out at step S104 (S105). If it is one of the data item names read out at step S104, the data item is already charged. Therefore, a charging process (S106) is skipped, and the data item having that name is transmitted to the mobile phone 12 (S108). On the other hand, if the data item name included in the URL received at step S102 is not the name read out at the step S104, the data item has not yet been charged, and therefore a charging process is performed (S106). More specifically, the price shown on the download data list of Fig. 4 is transmitted to the base station 14 together with the user identifying information, and the base station 14 is requested to collect payment from the user. Thus, it is made possible for the base station 14 to charge the user for the data provision fee together with a calling fee of the mobile phone 12. Further, when the request to collect payment for data provision is accepted and the charging process is completed, the data distribution server 18 adds the data item name included in the URL received at the step S102 to the charged data table stored in the charge management DB 20 in association with the user identifying information acquired at step S103 (S107). As a result, this particular data item will be regarded as being already charged from the next time. While the base station 14 is requested to collect payment in the above example, an alternative method is also possible in which a credit card number is received from the mobile phone 12, and the number and the data provision fee are transmitted to the credit card company, so as to ask the company to collect payment. Further, various other charging processes may be used in place of the charging process at the step S106. After the process of registration to the charged data table is completed at the step S107, the data item having the name included in the URL received at the step S102 is transmitted to the mobile phone 12 (S108). It should be noted that the data transmitted to the mobile phone 12 may be, for example hypertext including a wallpaper image or music data representing a ringing melody.

According to the first embodiment described above, a charging process will not be repeated for the data item whose name is contained in the charged data table, and such a data item can be downloaded free of charge, so that unnecessary downloaded data can be freely deleted without any concern about the charge even if the data might be needed again in the future.

While in the above description the charging process (S106) is skipped if the data item is already charged, the charging process may be performed to provide the requested data item at a discounted rate. Further, instead of charging data in the actually circulated currency, data may be charged in, for example, original and virtual currency for an imaginary game space (such as tokens, medals or coins). Further, a transaction process of, for example, reducing the value of coupons or point coupons in accordance with the price of data may be performed instead of the charging process.

In addition, although data is provided to the mobile phone 12 in the above description, the present invention can be equally applied to data provision for desktop or portable personal computers, PDAs (portable data terminals), and the like.

### [Second Embodiment]

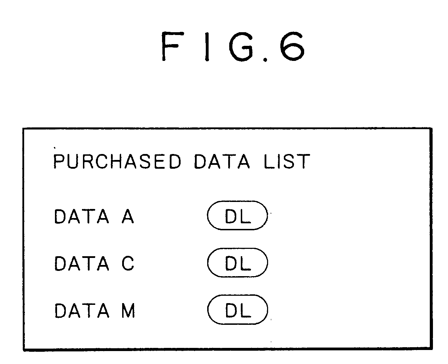

While a user of the mobile phone 12 will not know whether or not a particular data item is already charged until he/she presses the download button shown on the download data list (Fig. 4) in the first embodiment, alternatively a user may be informed which data items have already been purchased. More specifically, as shown in Fig. 5, a link button (labeled with the word "Here" in the figure) for acquiring the purchased data list may be included at the topmost portion of the download data list. By selecting the link button using the group of buttons of the mobile phone 12, a list of the data items whichitems that are purchased by the user and for which the charging process has already been performed may be provided to the mobile phone 12. Fig. 6 shows one example of such a purchased data list. The purchased data list shown in Fig. 6 is transmitted to the user with the user identifying information of "0001" and is generated based on the record in the uppermost row in Fig. 2.

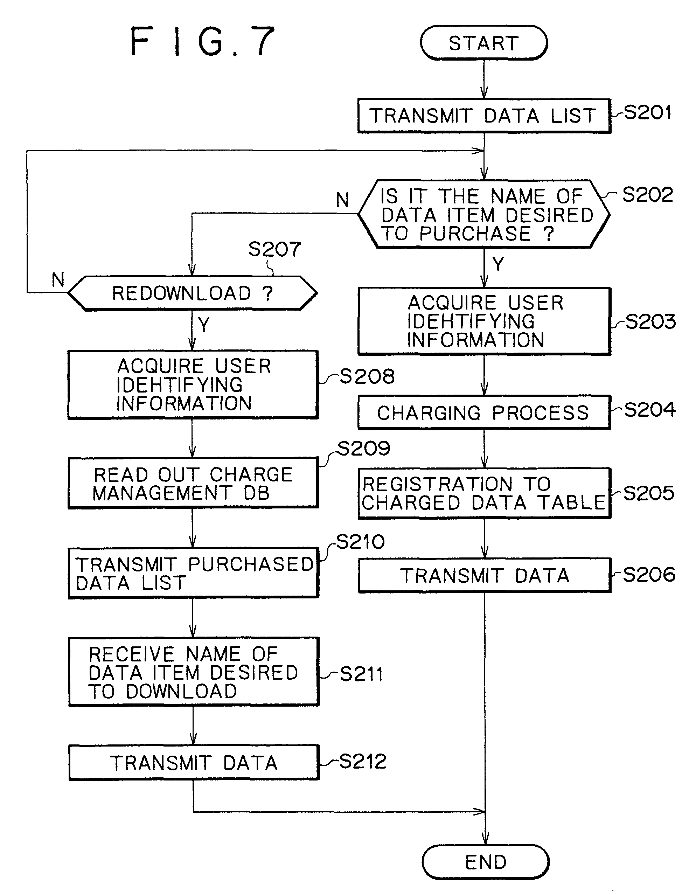

A data distribution system for performing such a data provision process will now be explained. This data distribution system is implemented by a configuration similar to that of the data distribution system 10 shown in Fig. 1 except that the process performed by the data distribution server 18 is different from that in the first embodiment. Fig. 7 is a flow chart for describing a process performed by the data distribution server 18 according to the second embodiment.

As shown in Fig. 7, according to the second embodiment, the data distribution server 18 first transmits the download data list shown in Fig. 5 to the mobile phone 12 in response to a request from the mobile phone 12 (S201). Determination is then made as to whether a URL (data provision request) including the name of the data item the user wishes to purchase is transmitted from the mobile phone 12, or the button labeled with the word "Here" is selected at the mobile phone 12 to transmit a URL requesting the purchased data list (S202, S207). When the URL, i.e. data provision request, is transmitted from the mobile phone 12, the user identifying information is acquired from the URL (S203), and a charging process is performed for the user identified by the user identifying information (S204). The data item name included in the URL (data provision request) received at the step S202 is additionally stored in the charged data table stored in the charge management DB 20 in association with the user identifying information acquired at the step S203 (S205), and the data requested by the user is transmitted to the mobile phone 12 (S206). On the other hand, when the user of the mobile phone 12 selects the button labeled with the word "Here" in the download data list shown in Fig. 5 to request the purchased data list (S207), the user identifying information is acquired from the URL transmitted from the mobile phone 12 by selecting that button (S208). The data item name stored in association with the user identifying information in the charged data table is read out (S209). The data distribution server 18 generates a hypertext representing the purchased data list using the readout data item name, and returns the hypertext to the mobile phone 12 (S210). The purchased data list is presented on the display of the mobile phone 12 based on the hypertext. When the user selects a download button corresponding to the data item he/she wishes to download based on the purchased data list, a URL including the name of that data item is transmitted to the data distribution server 18. Receiving this URL (S211), the data distribution server 18 transmits the requested data item to the mobile phone 12 without performing the charging process (S212).

According to the data distribution system of the second embodiment described above, the purchased data list for each user can be transmitted to the mobile phone 12 as necessary, and users can clearly recognize the data items they have purchased.

### [Third Embodiment]

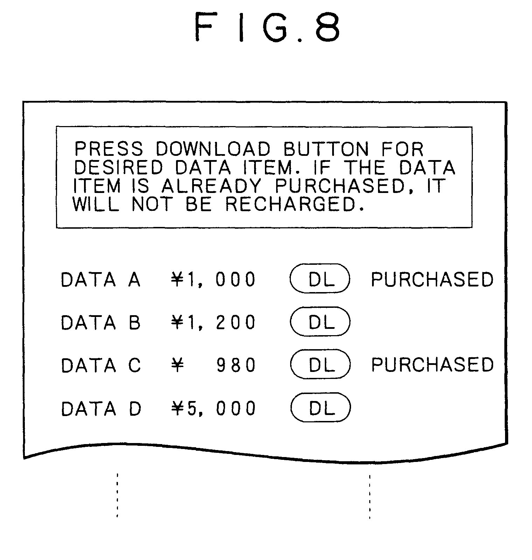

While in the second embodiment the purchased data list is transmitted to the mobile phone 12 so that each user is informed of the data item he/she has purchased, the data item already purchased by each user (i.e. the item for which the charging process is completed) may be labeled with a message, such as "purchased" in the download data list illustrated in Fig. 4, to thereby distinguish the purchased data item from those that aree unpurchased. Fig. 8 shows an example of the download data list in which the purchased data item is labeled with the message "purchased" on the side of the download button. Such a download data list is generated based on the record in the uppermost row of the charged data table shown in Fig. 2.

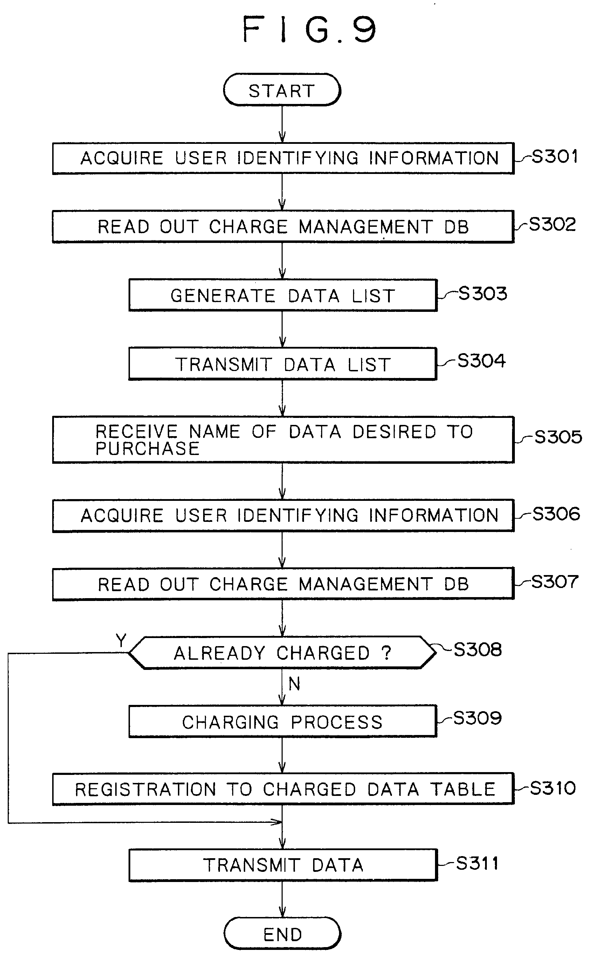

A data distribution system for performing such a data provision process will be discussed below. This data distribution system is implemented by a configuration similar to that of the data distribution system 10 shown in Fig. 1. However, the process performed by the data distribution server 18 is different in the third embodiment from those in the first and second embodiments. Fig. 9 is a flow chart for describing the process performed by the data distribution server 18 according to the third embodiment.

Referring to Fig. 9, when a URL requesting a download data list is received from the mobile phone 12, the user identifying information is acquired therefrom in the third embodiment (S301). The data item name associated with the user identifying information is read out from the purchased data table stored in the charge management DB 20 (S302). Next, hypertext representing the download data list is generated based on the readout data item name (S303). Such generation of the hypertext can be achieved by, for example, preparing hypertext for displaying the download data list illustrated in Fig. 4 by the data distribution server 18 in advance and adding data for displaying the message "purchased" for the data item whose name is read out at the step S302 on the right side of the download button for that data item. The thus generated hypertext representing the download data list is transmitted to the mobile phone 12 (S304). The process from the step S305 to the step S311 is the same as that from the step S102 to the step S108 shown in Fig. 3.

According to the data distribution system of the third embodiment described above, the purchased data item for which a charging process is completed is displayed distinctively from the unpurchased item for which a charging process is not performed, so that users can be instantly informed of the data they have purchased.

## Claims

1. A data provision device for providing a user with data, comprising:
data provision request reception means for receiving a data provision request from the user;
user identifying information acquisition means for acquiring user identifying information identifying the user;
table storage means for storing a table in which the user identifying information and data identifying information identifying a data item for which a transaction process is completed are associated with each other;
data identifying information reading means for reading out from said table the data identifying information associated with the user identifying information acquired by said user identifying information acquisition means;
determination means for determining whether or not said data provision request is made for the data item for which the transaction process is completed and which is identified by the data identifying information read out by said data identifying information reading means;
data transmission means for performing the transaction process for data provision and returning a data item in accordance with said data provision request when said determination means determines that said data provision request is not made for the data item for which the transaction process is completed and which is identified by the data identifying information read out by said data identifying information reading means; and
data retransmission means for restricting said transaction process for data provision and returning the data item in accordance with said data provision request when said determination means determines that said data provision request is made for the data item for which the transaction process is completed and which is identified by the data identifying information read out by said data identifying information reading means.

2. A data provision device according to claim 1, further comprising:
list generation means for reading out from said table the data identifying information associated with the user identifying information acquired from said user identifying information acquisition means, and generating a list including a name of the data item for which the transaction process is completed and which is identified by the readout data identifying information; and
list transmission means for transmitting the list generated by said list generation means to the user identified by the user identifying information acquired by said user identifying information acquisition means.

3. A data provision device according to claim 1 or 2, wherein said transaction process is a charging process.

4. A data provision device according to any one of claims 1-3, wherein said data transmission means additionally stores in said table the data identifying information identifying the data item in accordance with said data provision request in association with the user identifying information acquired by said user identifying information acquisition means when said transaction process is completed.

5. A data provision method for providing a user with data, said method comprising:
receiving a data provision request from the user;
acquiring user identifying information identifying the user;
reading out data identifying information associated with the acquired user identifying information from a table in which the user identifying information and the data identifying information identifying a data item for which a transaction process is completed are associated with each other;
determining whether or not said data provision request is made for the data item for which the transaction process is completed and which is identified by the readout data identifying information;
restricting said transaction process for data provision when said data provision request is determined as being made for the data item for which the transaction process is completed and which is identified by the data identifying information read out from said table.
